# EUROPEAN PATENT APPLICATION

(11) **EP 4 563 214 A1**
(43) Date of publication of application: **04.06.2025**
(21) Application number: 23865404.0
(22) Date of filing: 07.09.2023
(51) Int. Cl.: B01D 53/58, B01D 53/78, B63J 2/02

(54) **SCRUBBER AND GAS TREATMENT METHOD IN SCRUBBER**

(30) Priority: 15.09.2022 JP 2022146688
(71) Applicant: Mitsubishi Shipbuilding Co., Ltd., Tokyo 108-8015 (JP)
(72) Inventor: TAKAMATSU, Tomoteru, Yokohama-shi, Kanagawa 220-8401 (JP); YAMADA, Daisuke, Yokohama-shi, Kanagawa 220-8401 (JP); YOSHIDA, Atsushi, Yokohama-shi, Kanagawa 220-8401 (JP)
(74) Representative: Studio Torta S.p.A.
(86) International application number: PCT/JP2023/032705
(87) International publication number: WO 2024/058049

(57) **Abstract**

This scrubber comprises: a casing; a gas supply unit capable of supplying gas containing ammonia into the casing; a liquid distributing unit capable of distributing absorption liquid supplied from outside of the casing from the top in the casing; a gas release unit capable of releasing gas from the top of the casing; an absorption liquid discharge unit capable of discharging the absorption liquid from the bottom of the casing; and a gas circulating line that circulates gas from the top of the casing to the bottom of the casing.

## Description

### Technical Field

The present disclosure relates to a scrubber and a gas treatment method in the scrubber.

The present application claims the right of priority based on Japanese Patent Application No. 2022-146688 filed with the Japan Patent Office on September 15, 2022, the content of which is incorporated herein by reference.

### Background Art

In a room in which a device, facility, or the like for handling ammonia is accommodated, there is a possibility of ammonia leakage. Furthermore, in the device, facility, or the like for handling ammonia, purging with an inert gas that does not react with ammonia may be performed to discharge remaining ammonia together with the inert gas. Since ammonia may act on human mucous membranes to cause damage, a gas containing the ammonia generated due to the above-described leakage, purging, or the like cannot be released into the atmosphere as it is.

In PTL 1, there is described a so-called scrubber that sprays an absorbing liquid to a gas containing a harmful substance, thereby absorbing the harmful substance by the absorbing liquid. More specifically, PTL 1 discloses a ship exhaust gas purification system that includes a spray tower and a spray device, as a SOx scrubber that removes a sulfur oxide (SOx). The spray tower includes an exhaust gas intake port and an exhaust gas discharge port. The exhaust gas intake port introduces an exhaust gas into the internal space of the spray tower. The exhaust gas discharge port extracts a purified exhaust gas from the internal space of the spray tower. In the internal space of the spray tower, a general flow of the exhaust gas passes from the exhaust gas intake port to the exhaust gas discharge port. The spray device provides a scrubber liquid flow facing the general flow of the exhaust gas in the internal space of the spray tower. The scrubber liquid flow absorbs sulfur oxides by coming into contact with the exhaust gas in the internal space of the spray tower, thereby reducing the amount of sulfur oxides in the exhaust gas.

### Citation List

### Patent Literature

[PTL 1] Japanese Patent No. 7015794

### Summary of Invention

### Technical Problem

However, in a case of attempting to remove ammonia in the air by the scrubber as described in PTL 1, for example, if ammonia concentration unexpectedly increases or a temporary defect occurs in the spray of the scrubber, there is a possibility that ammonia may not be sufficiently removed. In addition, for example, ifn the scrubber is made to be able to cope with an unexpected increase in the ammonia concentration, the amount of the absorbing liquid that is supplied to the scrubber or the amount of the ammonia absorbing liquid that has absorbed ammonia is increased. Further, there is a problem in that measures such as increasing the capacity of a casing of the scrubber are required in order to make it possible to cope with the temporary defect of the spray.

The present disclosure has been made in order to solve the above-described problems, and an object of the present disclosure is to provide a scrubber capable of suppressing the release of ammonia to the outside while suppressing an increase in flow rate of an absorbing liquid and an increase in the capacity of a casing, and a gas treatment method in the scrubber.

### Solution to Problem

In order to solve the above-described problems, a scrubber according to the present disclosure includes a casing, a gas supply part, a liquid spray part, a gas release part, an absorbing liquid discharge part, and a gas circulation line. The gas supply part is capable of supplying a gas containing ammonia into the casing. The liquid spray part is capable of spraying an absorbing liquid that is supplied from an outside of the casing from an upper portion in the casing. The gas release part is capable of releasing the gas from an upper portion of the casing. The absorbing liquid discharge part is capable of discharging the absorbing liquid from a lower portion of the casing. The gas circulation line circulates the gas from the upper portion of the casing to the lower portion of the casing.

A gas treatment method in the scrubber according to the present disclosure is a gas treatment method in the scrubber as described above. The gas treatment method in the scrubber includes a step of circulating a gas to a lower portion of a casing, a step of detecting ammonia concentration, and a step of releasing a gas from an upper portion of the casing. In the step of circulating a gas to a lower portion of the casing, water that is supplied from the outside of the casing is sprayed from an upper portion in the casing while supplying a gas containing ammonia into the casing, and the gas is circulated from the upper portion of the casing to the lower portion of the casing. In the step of detecting ammonia concentration, the ammonia concentration of the gas that is released from the upper portion of the casing is detected. In the step of releasing a gas from an upper portion of the casing, the circulation of the gas from the upper portion of the casing to the lower portion of the casing is stopped, and the gas is released from the upper portion of the casing, in a case where the detected ammonia concentration falls below a gas concentration reference value set in advance.

### Advantageous Effects of Invention

According to the scrubber and the gas treatment method in the scrubber of the present disclosure, it is possible to suppress the release of ammonia to the outside while suppressing an increase in the flow rate of the absorbing liquid and an increase in the capacity of the casing.

### Brief Description of Drawings

Fig. 1 is a diagram showing a configuration of a scrubber according to a first embodiment of the present disclosure.
Fig. 2 is a flowchart showing a procedure of a gas treatment method in the scrubber according to an embodiment of the present disclosure.
Fig. 3 is a diagram showing a step of circulating a gas to a lower portion of a casing in the gas treatment method in the scrubber according to the embodiment of the present disclosure.
Fig. 4 is a diagram showing a step of releasing a gas from an upper portion of the casing in the gas treatment method in the scrubber according to the embodiment of the present disclosure.
Fig. 5 is a diagram showing a state in which an absorbing liquid is discharged from the lower portion of the casing in the scrubber according to the embodiment of the present disclosure.
Fig. 6 is a diagram showing a configuration of a scrubber according to a second embodiment of the present disclosure.
Fig. 7 is a diagram showing a hardware configuration of a control device of the scrubber according to the second embodiment of the present disclosure.
Fig. 8 is a functional block diagram of the control device according to the second embodiment of the present disclosure.

### Description of Embodiments

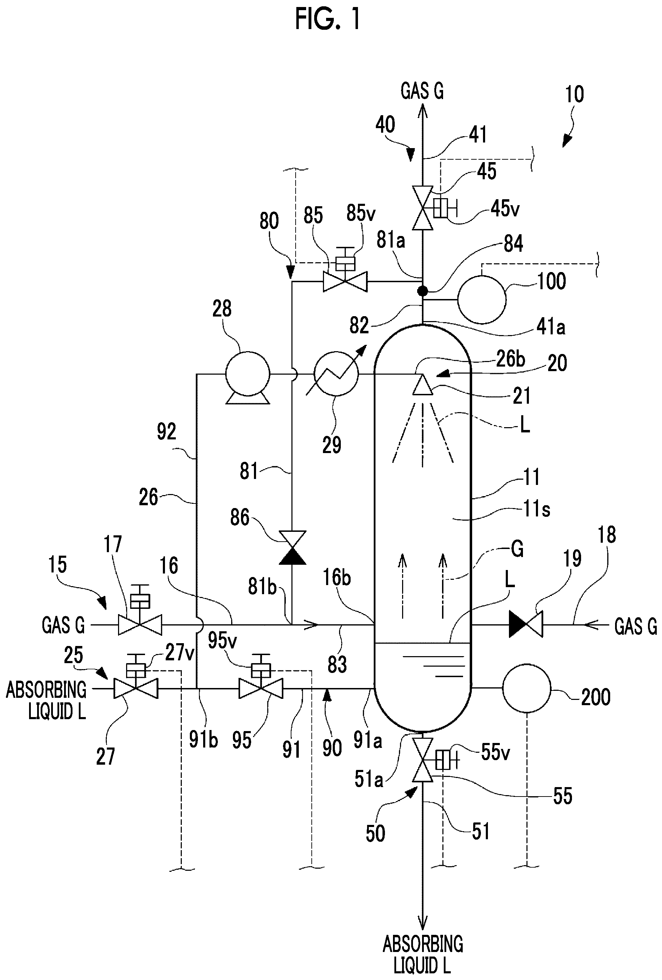

Hereinafter, a scrubber and a gas treatment method in the scrubber according to embodiments of the present disclosure will be described with reference to Figs. 1 to 8.

### <First Embodiment>

### (Overall Configuration of Scrubber)

As shown in Fig. 1, a scrubber 10 of the present embodiment performs treatment of removing ammonia from a gas G containing ammonia. Such a scrubber 10 is provided in an ammonia facility that handles ammonia. As an example of the ammonia facility, a facility provided with a tank for storing ammonia, a facility provided with a device that uses ammonia as fuel, a facility provided with a distribution system through which ammonia flows, or the like can be exemplified. In addition, the ammonia facility may be installed on land or may be provided in a floating structure that floats on the sea, including various ships. In the case of the ship, the ship type is not limited to a specific ship type. As an example of the ship type of the ship, a liquefied gas carrier, a ferry, a roll-on/roll-off (RORO) ship, a car carrier, a passenger ship, or the like can be exemplified. In addition, the floating structure is not limited to a ship, and may be a floating storage unit (FSU), a floating storage and regasification unit (FSRU), or the like.

In addition, the scrubber 10 performs purging with a gas containing ammonia leaked from an ammonia facility that handles ammonia, or an inert gas that does not react with ammonia, and removes ammonia from the gas containing ammonia discharged together with the inert gas, or the like.

As shown in Fig. 1, the scrubber 10 includes at least a casing 11, a gas supply part 15, an absorbing liquid supply part 25, a liquid spray part 20, a gas release part 40, a gas circulation line 80, an absorbing liquid discharge part 50, and an absorbing liquid circulation line 90.

The casing 11 is formed in a tubular shape extending in an up-down direction Dv. An absorbing liquid L can be stored in a lower portion of an internal space 11s of the casing 11 (inside the casing).

The gas supply part 15 can supply the gas G containing ammonia (hereinafter, simply referred to as the gas G) into the casing 11. The gas supply part 15 includes a gas supply line 16 and an opening-closing valve 17.

One end of the gas supply line 16 is connected to a gas generation source (not shown) that generates the gas G which is a treatment target. The other end 16b of the gas supply line 16 is connected to the casing 11. The other end 16b is open at a position above the liquid level of the absorbing liquid L in the internal space 11s of the casing 11.

The opening-closing valve 17 opens and closes a flow path in the gas supply line 16. The supply of the gas G into the casing 11 through the gas supply line 16 is intermittently performed by opening and closing the opening-closing valve 17. In the first embodiment, in a case where a fuel supply system of a combustion device using ammonia as fuel is purged with an inert gas, the gas supply line 16 supplies the gas G sent together with the inert gas to the internal space 11s of the casing 11.

In addition, the gas supply part 15 includes a sub gas supply line 18. The sub gas supply line 18 supplies, for example, the gas G containing low concentration or a small amount of ammonia from a system containing an ammonia gas, such as an air vent pipe of a wastewater tank, for example, into the casing 11. The sub gas supply line 18 is connected to the casing 11. The sub gas supply line 18 is connected to the casing 11 to be open at a position above the liquid level of the absorbing liquid L in the internal space 11s of the casing 11. A case where a check valve 19 that prevents the backflow of the gas G from the casing 11 side is provided in the sub gas supply line 18 is exemplified.

The gas G supplied from the gas supply line 16 of the gas supply part 15 to the internal space 11s of the casing 11 and the gas G supplied from the sub gas supply line 18 to the internal space 11s of the casing 11 rise from the lower portion toward the upper portion in the internal space 11s in the casing 11.

The absorbing liquid supply part 25 supplies the absorbing liquid L to the liquid spray part 20 from the outside of the casing 11. The absorbing liquid supply part 25 includes an absorbing liquid supply line 26, a fifth valve 27, and a pump 28.

One end of the absorbing liquid supply line 26 is connected to a supply source (not shown) of the absorbing liquid L. In a case where fresh water is used as the absorbing liquid L, one end of the absorbing liquid supply line 26 is connected to a fresh water tank (not shown) as a supply source. In addition, in a case where the scrubber 10 is provided in the floating structure and seawater around the floating structure is used as the absorbing liquid, one end of the absorbing liquid supply line 26 is disposed to face the sea.

The other end 26b of the absorbing liquid supply line 26 is connected to a liquid spray nozzle 21 disposed at an upper portion of the internal space 11s in the casing 11. The pump 28 is provided in the middle of the absorbing liquid supply line 26, and the absorbing liquid L is supplied to the liquid spray nozzle 21 by the pump 28.

An absorbing liquid cooling part 29 capable of cooling the absorbing liquid L to be sprayed from the upper portion in the casing 11 by the liquid spray part 20 is provided in the middle of the absorbing liquid supply line 26 exemplified in the first embodiment. The absorbing liquid cooling part 29 cools the absorbing liquid L in the absorbing liquid supply line 26 by heat exchange with an external heat medium. The absorbing liquid L is cooled by the absorbing liquid cooling part 29, and thus the ammonia absorption efficiency by the absorbing liquid L is increased.

The liquid spray part 20 is capable of spraying the absorbing liquid L supplied from the absorbing liquid supply part 25 from the upper portion in the casing 11. The liquid spray part 20 includes the liquid spray nozzle 21. The liquid spray nozzle 21 sprays the absorbing liquid L into the internal space 11s of the casing 11 with injection, dropping, spraying, or the like. The absorbing liquid L that has been sprayed moves downward in the internal space 11s of the casing 11 due to its own weight. In a process in which the absorbing liquid L moves in the internal space 11s of the casing 11, the absorbing liquid L comes into contact with the gas G that rises from the lower portion toward the upper portion of the internal space 11s of the casing 11, and absorbs the ammonia component contained in the gas G.

The gas release part 40 is capable of releasing the gas G in the internal space 11s from the upper portion of the casing 11. The gas release part 40 includes a gas release line 41 and a first valve 45.

One end 41a of the gas release line 41 exemplified in the first embodiment is connected to the top portion of the casing 11. As a connection destination of the other end (not shown) of the gas release line 41, a funnel, a vent post, or the like can be exemplified. The gas release part 40 releases the gas G, for example, to the atmosphere.

The first valve 45 opens and closes a flow path of the gas G from the casing 11 to the gas release part 40. The first valve 45 opens and closes the flow path of the gas release line 41. The release of the gas G from the casing 11 through the gas release line 41 is intermittently performed by opening and closing the first valve 45.

The gas circulation line 80 circulates the gas G from the upper portion of the casing 11 to the lower portion of the casing 11. The gas circulation line 80 of the first embodiment circulates the gas G from the upper portion of the casing 11 to the lower portion of the casing 11 through the outside of the casing 11. The gas circulation line 80 may be made to circulate the gas G from the upper portion of the casing 11 to the lower portion of the casing 11 through the inside of the casing 11.

The gas circulation line 80 includes a gas circulation connection pipe 81, a second valve 85, a fan 84, and a check valve 86. One end 81a of the gas circulation connection pipe 81 of the first embodiment is connected to the gas release line 41 between one end 41a of the gas release line 41 and the first valve 45. Further, the other end 81b of the gas circulation connection pipe 81 is connected to the gas supply line 16 between the other end 16b of the gas supply line 16 and the opening-closing valve 17.

A part of the gas circulation line 80 exemplified in the first embodiment is shared with the gas release line 41 and the gas supply line 16. Specifically, in the gas circulation line 80, a partial section 82 between one end 41a of the gas release line 41 and a portion of the gas release line 41 to which one end 81a of the gas circulation connection pipe 81 is connected is shared with the gas release line 41. In addition, in the gas circulation line 80, a partial section 83 between the other end 16b of the gas supply line 16 and a portion of the gas supply line 16 to which the other end 81b of the gas circulation connection pipe 81 is connected is shared with the gas supply line 16. That is, the gas circulation line 80 includes the partial section 82 of the gas release line 41, the gas circulation connection pipe 81, and the partial section 83 of the gas supply line 16. The gas circulation line 80 circulates the gas G released from the upper portion of the casing 11 to the lower portion of the casing 11 through the partial section 82, the gas circulation connection pipe 81, and the partial section 83.

The second valve 85 opens and closes a flow path of the gas G from the casing 11 to the gas circulation line 80. In the first embodiment, the second valve 85 is provided in the middle of the gas circulation connection pipe 81. The flow path of the gas G in the gas circulation connection pipe 81 is opened and closed by opening and closing the second valve 85. The inflow of the gas G from the casing 11 to the gas circulation connection pipe 81 of the gas circulation line 80 is intermittently performed by opening and closing the second valve 85.

The fan 84 sucks and sends out the gas G in the internal space 11s of the casing 11 from the upper portion of the casing 11. The fan 84 of the first embodiment is provided in the partial section 82, and more specifically, is provided between an ammonia gas concentration meter 100 (described later) and the portion to which one end 81a of the gas circulation connection pipe 81 is connected. The fan 84 may be provided between one end 81a of the gas circulation connection pipe 81 and the second valve 85.

The check valve 86 is provided in the middle of the gas circulation connection pipe 81. Specifically, the check valve 86 is provided between the second valve 85 and the other end 81b of the gas circulation connection pipe 81. The check valve 86 prevents the backflow of the gas G in the casing 11 from the partial section 83 side while allowing the flow of the gas G from the gas circulation connection pipe 81 to the gas supply line 16.

The absorbing liquid discharge part 50 is capable of discharging the absorbing liquid L from the lower portion of the casing 11 to the outside of the casing 11. The absorbing liquid discharge part 50 includes an absorbing liquid discharge line 51 and a third valve 55.

One end 51a of the absorbing liquid discharge line 51 is connected to a bottom portion of the casing 11. The other end (not shown) of the absorbing liquid discharge line 51 is connected to a waste liquid tank (not shown) or the like.

The third valve 55 is provided in the middle of the absorbing liquid discharge line 51. The third valve 55 opens and closes a flow path of the absorbing liquid L that is discharged from the casing 11 to the absorbing liquid discharge part 50. The discharge of the absorbing liquid L from the casing 11 through the absorbing liquid discharge line 51 is intermittently performed by opening and closing the third valve 55.

The absorbing liquid circulation line 90 is made to be capable of circulating the absorbing liquid L from the lower portion of the casing 11 to the upper portion of the casing 11 via the liquid spray part 20. The absorbing liquid circulation line 90 includes an absorbing liquid circulation connection pipe 91 and a fourth valve 95. The absorbing liquid circulation connection pipe 91 forms a flow path through which the absorbing liquid L flows. One end 91a of the absorbing liquid circulation connection pipe 91 is connected to the lower portion of the casing 11. One end 91a is connected to the casing 11 at a position below the liquid level of the absorbing liquid L stored in the internal space 11s of the casing 11. The other end 91b of the absorbing liquid circulation connection pipe 91 is connected to the absorbing liquid supply line 26 between the fifth valve 27 and the pump 28 of the absorbing liquid supply line 26.

A part of the absorbing liquid circulation line 90 exemplified in the first embodiment is shared with the absorbing liquid supply line 26. Specifically, in the absorbing liquid circulation line 90, a partial section 92 between a position of the absorbing liquid supply line 26, to which the other end 91b of the absorbing liquid circulation connection pipe 91 is connected, and the other end 26b of the absorbing liquid supply line 26 is shared with the absorbing liquid supply line 26. That is, the absorbing liquid circulation line 90 of the first embodiment includes the absorbing liquid circulation connection pipe 91 and the partial section 92 of the absorbing liquid supply line 26. The absorbing liquid circulation line 90 supplies the absorbing liquid L extracted from the lower portion of the casing 11 to the liquid spray nozzle 21 of the liquid spray part 20 through the absorbing liquid circulation connection pipe 91 and the partial section 92.

The fourth valve 95 opens and closes a flow path of the absorbing liquid L from the casing 11 to the absorbing liquid circulation line 90. The fourth valve 95 of the first embodiment is provided in the middle of the absorbing liquid circulation connection pipe 91. The flow path of the absorbing liquid L in the absorbing liquid circulation connection pipe 91 is opened and closed by opening and closing the fourth valve 95. The extraction of the absorbing liquid L from the lower portion of the casing 11 to the absorbing liquid circulation connection pipe 91 of the absorbing liquid circulation line 90 is intermittently performed by opening and closing the fourth valve 95.

The scrubber 10 exemplified in the first embodiment further includes the ammonia gas concentration meter 100 and an ammonia absorbing liquid concentration meter 200.

The ammonia gas concentration meter 100 detects the ammonia concentration of the gas G released from the casing 11 to the gas release part 40. The ammonia gas concentration meter 100 of the first embodiment is provided between one end 41a of the gas release line 41 and the position of the gas release line 41 to which one end 81a of the gas circulation connection pipe 81 is connected.

The ammonia absorbing liquid concentration meter 200 detects the ammonia concentration of the absorbing liquid L in the casing 11. In the first embodiment, the ammonia absorbing liquid concentration meter 200 detects the ammonia concentration of the absorbing liquid L stored in the lower portion of the internal space 11s of the casing 11.

Each of the first valve 45, the second valve 85, the third valve 55, the fourth valve 95, and the fifth valve 27 is an automatic operation valve such as a piston valve, for example, and the opening and closing operation thereof can be controlled based on a signal received from the outside, such as a control panel (not shown). The opening and closing operation of each of a valve drive unit 45v of the first valve 45 and a valve drive unit 85v of the second valve 85 is executed based on the detection value of the ammonia concentration detected by the ammonia gas concentration meter 100. The opening and closing operation of each of a valve drive unit 55v of the third valve 55, a valve drive unit 95v of the fourth valve 95, and the valve drive unit 27v of the fifth valve 27 is executed based on the detection value of the ammonia concentration of the absorbing liquid L detected by the ammonia absorbing liquid concentration meter 200. In the first embodiment, the opening and closing operation of each of the valve drive units 45v, 85v, 55v, 95v, and 27v is executed by remote operation or the like by an operator who checks the detection values of the ammonia gas concentration meter 100 and the ammonia absorbing liquid concentration meter 200.

### (Procedure of Gas Treatment Method in Scrubber)

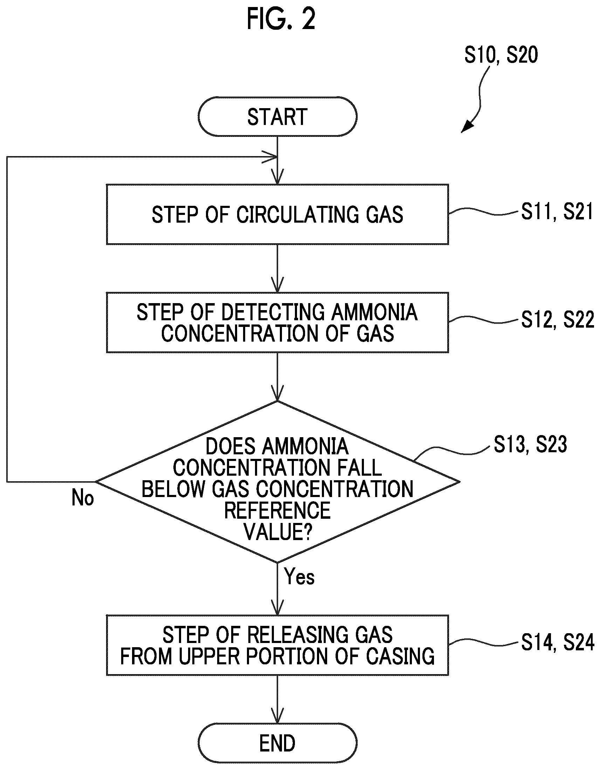

Fig. 2 is a flowchart showing a procedure of the gas treatment method in the scrubber according to the embodiment of the present disclosure.

As shown in Fig. 2, a gas treatment method S10 in the scrubber 10 includes step S11 of circulating the gas G, step S12 of detecting the ammonia concentration of the gas G, step S13 of determining whether or not the ammonia concentration falls below a gas concentration reference value, and step S14 of releasing the gas G from the upper portion of the casing 11.

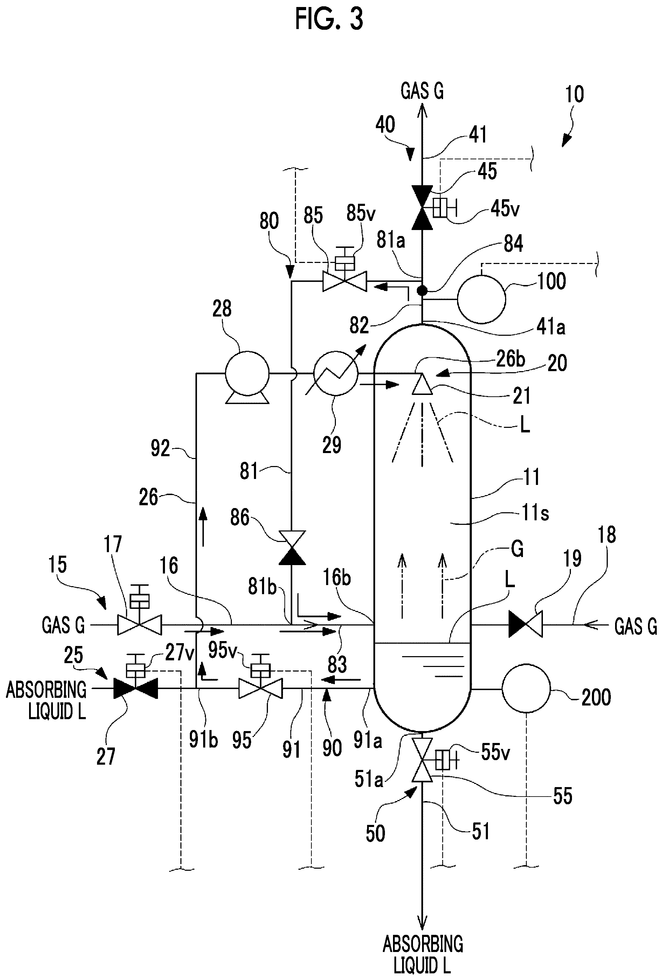

Fig. 3 is a diagram showing a step of circulating the gas to the lower portion of the casing in the gas treatment method in the scrubber according to the embodiment of the present disclosure.

In the scrubber 10, after starting up to perform treatment of removing ammonia contained in the gas G, step S11 of circulating the gas G is executed. In step S11 of circulating the gas G, as shown in Fig. 3, the opening-closing valve 17 is opened, the first valve 45 is closed, and the second valve 85 is opened. By opening the opening-closing valve 17, the gas G containing ammonia is introduced into the internal space 11s of the casing 11 through the gas supply line 16. The ammonia in the introduced gas G is absorbed by the absorbing liquid L that is sprayed from the liquid spray nozzle 21 of the liquid spray part 20 in the internal space 11s of the casing 11. The gas G from which ammonia has been removed in the internal space 11s of the casing 11 is circulated to the lower portion of the casing 11 through the gas circulation line 80 and comes into contact with the absorbing liquid L that is sprayed from the liquid spray part 20 again. In this way, the ammonia concentration of the gas G is reduced. In this step, since the first valve 45 is closed, the gas G is not discharged to the outside during the treatment. Therefore, in a case where the scrubber 10 is mounted on a floating structure, or the like, the gas G is suppressed from leaking out carelessly due to oscillation.

In step S12 of detecting the ammonia concentration of the gas G, the ammonia concentration of the gas G that is released from the upper portion of the casing 11 is detected by the ammonia gas concentration meter 100.

In step S13 of determining whether or not the ammonia concentration falls below a gas concentration reference value, it is determined whether or not the ammonia concentration of the gas G detected by the ammonia gas concentration meter 100 falls below the gas concentration reference value. This determination may be performed by the operator by visual observation or the like. However, in a case where the ammonia concentration of the gas G detected by the ammonia gas concentration meter 100 falls below the gas concentration reference value, an alarm signal or the like may be output by a monitoring device or the like of the ammonia gas concentration meter 100.

In a case where in step S13, it is determined that the ammonia concentration of the gas G does not fall below the gas concentration reference value (No in step S13), the process returns to step S11. On the other hand, in a case where in step S13, it is determined that the ammonia concentration of the gas G falls below the gas concentration reference value (Yes in step S13), the process proceeds to step S14.

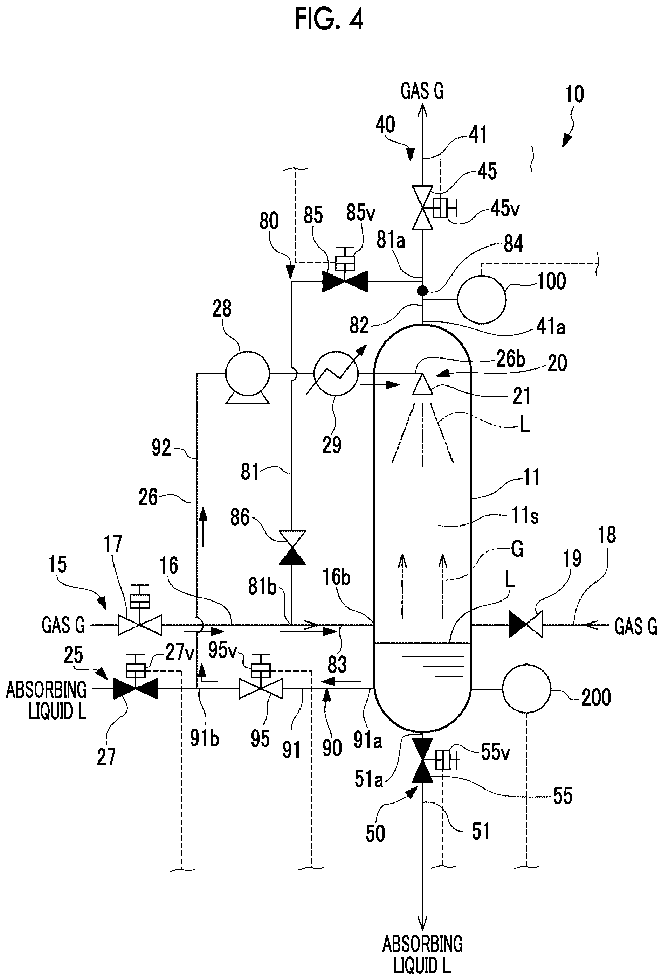

Fig. 4 is a diagram showing the step of releasing the gas from the upper portion of the casing in the gas treatment method in the scrubber according to the embodiment of the present disclosure.

In step S14 of releasing the gas G from the upper portion of the casing 11, as shown in Fig. 4, the first valve 45 is opened and the second valve 85 is closed. In this manner, the second valve 85 is closed, so that the circulation of the gas G from the upper portion of the casing 11 to the lower portion of the casing 11 is stopped. Then, by opening the first valve 45, the gas G from which the ammonia component has been removed in the internal space 11s of the casing 11 is released from the casing 11 to the gas release part 40. In this way, only the gas G from which the ammonia component has been sufficiently removed is released to the gas release part 40.

By the way, as described above, when the treatment of removing the ammonia contained in the gas G is performed, in the scrubber 10, basically, the absorbing liquid L is circulated from the lower portion of the casing 11 to the upper portion of the casing 11 via the liquid spray part 20 by the absorbing liquid circulation line 90. In this case, as shown in Figs. 3 and 4, the third valve 55 and the fifth valve 27 are closed, and the fourth valve 95 is opened.

In the scrubber 10, the ammonia concentration of the absorbing liquid L detected by the ammonia absorbing liquid concentration meter 200 is monitored, and it is determined whether or not the detected ammonia concentration of the absorbing liquid L is equal to or higher than an absorbing liquid concentration reference value set in advance. This determination may be performed by the operator by visual observation or the like. However, in a case where the ammonia concentration of the absorbing liquid L detected by the ammonia absorbing liquid concentration meter 200 is equal to or higher than the absorbing liquid concentration reference value, an alarm signal or the like may be output in a monitoring device or the like of the ammonia absorbing liquid concentration meter 200.

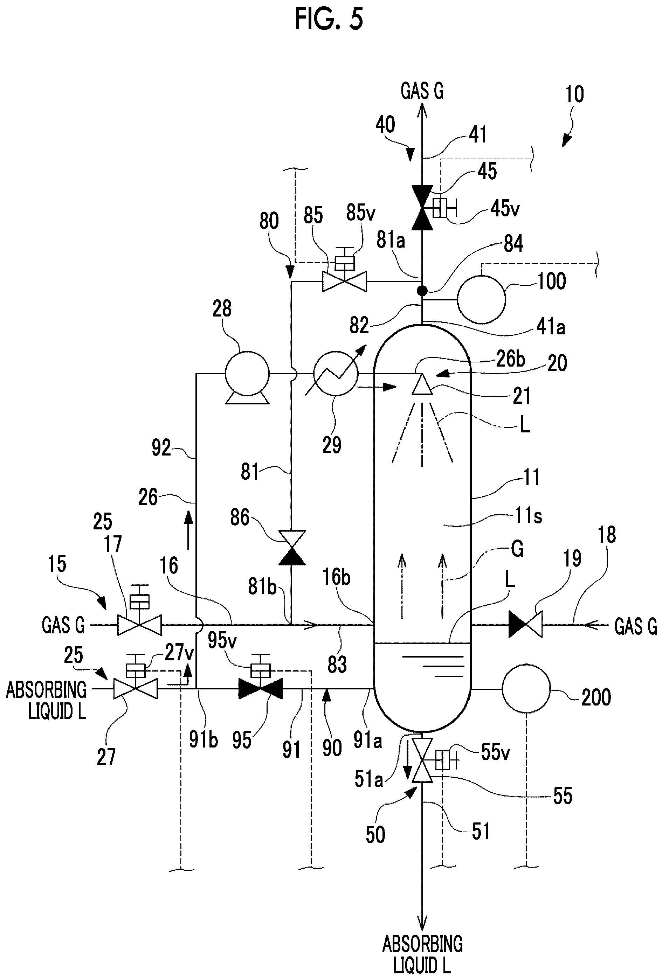

Fig. 5 is a diagram showing a state in which the absorbing liquid is discharged from the lower portion of the casing in the scrubber according to the embodiment of the present disclosure.

In a case where the ammonia concentration of the absorbing liquid L detected by the ammonia absorbing liquid concentration meter 200 is equal to or higher than the absorbing liquid concentration reference value, as shown in Fig. 5, the fourth valve 95 is closed, and the third valve 55 and the fifth valve 27 are opened. By opening the third valve 55 in this way, the absorbing liquid L that has absorbed ammonia by the contact with the gas G containing ammonia is discharged to the absorbing liquid discharge part 50. In addition, by opening the fifth valve 27, a new absorbing liquid L is supplied to the liquid spray part 20 from the outside of the casing 11 by the absorbing liquid supply part 25. In this way, the ammonia concentration of the absorbing liquid L in the internal space 11s of the casing 11 can be reduced. In Fig. 5, a case where the third valve 55 and the fifth valve 27 are opened when the gas G is not circulated is exemplified. However, the third valve 55 and the fifth valve 27 may be opened even when the gas G is circulated.

### (Operation and Effect)

In the first embodiment, the gas G containing ammonia is supplied to the internal space 11s of the casing 11 by the gas supply part 15. The liquid spray part 20 sprays the absorbing liquid L supplied from the outside of the casing 11 from the upper portion of the internal space 11s of the casing 11. In this way, the absorbing liquid L comes into contact with the gas G containing ammonia, so that the ammonia contained in the gas G is absorbed by the absorbing liquid L. The absorbing liquid L that has absorbed ammonia falls to the lower portion of the casing 11 due to its own weight. The gas G from which ammonia has been removed is released from the upper portion of the casing 11 by the gas release part 40. The absorbing liquid discharge part 50 discharges the absorbing liquid L to which the ammonia is absorbed, to the outside of the casing 11 from the lower portion of the casing 11. The gas circulation line 80 circulates the gas G from the upper portion of the casing 11 to the lower portion of the casing 11. That is, the gas circulation line 80 circulates the gas G after the ammonia is absorbed by the absorbing liquid L sprayed from the liquid spray part 20, from the upper portion of the casing 11 to the lower portion of the casing 11. The gas G circulated to the lower portion of the casing 11 comes into contact with the absorbing liquid L sprayed from the liquid spray part 20 again in the internal space 11s of the casing 11. In this way, even in a case where ammonia remains in the gas G in which ammonia is absorbed by the absorbing liquid L, the gas G is circulated to the lower portion of the casing 11, so that the absorption of the ammonia by the absorbing liquid L is performed multiple times. Therefore, even in a case where ammonia cannot be sufficiently removed by only once contact with the absorbing liquid L, the removal of ammonia from the gas G containing ammonia can be sufficiently performed. In addition, it is not necessary to increase the amount of the absorbing liquid L or increase the capacity of the casing 11 for that purpose. Therefore, it is possible to suppress the release of ammonia to the outside while suppressing an increase in the flow rate of the absorbing liquid L and an increase in the capacity of the casing 11.

In addition, in the first embodiment, the release of the gas G from the casing 11 to the gas release part 40 can be intermittently performed by opening and closing the first valve 45. In addition, the circulation of the gas G from the casing 11 to the gas circulation line 80 can be intermittently performed by opening and closing the second valve 85. The ammonia gas concentration meter 100 detects the ammonia concentration of the gas G flowing from the casing 11 to the gas release part 40. In this way, the first valve 45 and the second valve 85 can be opened and closed based on the ammonia concentration of the gas G detected by the ammonia gas concentration meter 100. For example, in a case where the detected ammonia concentration of the gas G falls below the gas concentration reference value set in advance, the first valve 45 is opened and the second valve 85 is closed. In this way, the gas G from which ammonia has been removed in the internal space 11s of the casing 11 is released from the casing 11 to the gas release part 40. In addition, in a case where the detected ammonia concentration of the gas G is equal to or higher than the gas concentration reference value set in advance, the first valve 45 is closed and the second valve 85 is opened. Then, the gas G from which ammonia has been removed in the internal space 11s of the casing 11 is circulated to the lower portion of the casing 11 through the gas circulation line 80 and comes into contact with the absorbing liquid L that is sprayed from the liquid spray part 20 again. In this way, the ammonia concentration of the gas G is reduced.

In addition, in the first embodiment, the absorbing liquid L can be circulated from the lower portion of the casing 11 to the upper portion of the casing 11 via the liquid spray part 20 by the absorbing liquid circulation line 90. The third valve 55 can intermittently discharge the absorbing liquid L from the casing 11 to the absorbing liquid discharge part 50. The fourth valve 95 can intermittently circulate the absorbing liquid L from the casing 11 through the absorbing liquid circulation line 90. The ammonia absorbing liquid concentration meter 200 detects the ammonia concentration of the absorbing liquid L in the internal space 11s of the casing 11. In this way, by opening and closing the third valve 55 and the fourth valve 95 based on the ammonia concentration of the absorbing liquid L in the internal space 11s of the casing 11, it is possible to switch between the discharge of the absorbing liquid L to the absorbing liquid discharge part 50 and the circulation of the absorbing liquid L to the upper portion of the casing 11 through the absorbing liquid circulation line 90.

In addition, in the first embodiment, in a case where the ammonia concentration of the absorbing liquid L detected by the ammonia absorbing liquid concentration meter 200 is equal to or higher than the absorbing liquid concentration reference value set in advance, the fifth valve 27 is opened. Then, the absorbing liquid L is supplied to the liquid spray part 20 from the outside of the casing 11 by the absorbing liquid supply part 25. In this way, the ammonia concentration of the absorbing liquid L can be reduced.

In addition, in the first embodiment, the absorbing liquid L that is sprayed from the upper portion of the internal space 11s of the casing 11 by the liquid spray part 20 can be cooled by the absorbing liquid cooling part 29. In particular, the temperature of the absorbing liquid L circulated by the absorbing liquid circulation line 90 rises due to the reaction heat during absorbing ammonia. By cooling the absorbing liquid L whose temperature has risen, the ammonia absorption efficiency of the absorbing liquid L can be increased.

In addition, in the first embodiment, the gas G can be sent out from the upper portion of the casing 11 by the fan 84. In particular, in a case where the gas G is circulated from the upper portion of the casing 11 to the lower portion of the casing 11 by the gas circulation line 80, the gas G can be efficiently circulated.

### <Second Embodiment>

Next, a scrubber and a gas treatment method in the scrubber according to a second embodiment of the present disclosure will be described. Since the second embodiment described below is different from the first embodiment only in the configuration including a control device 60, the same parts as those in the first embodiment will be denoted by the same reference numerals, and overlapping description will be omitted.

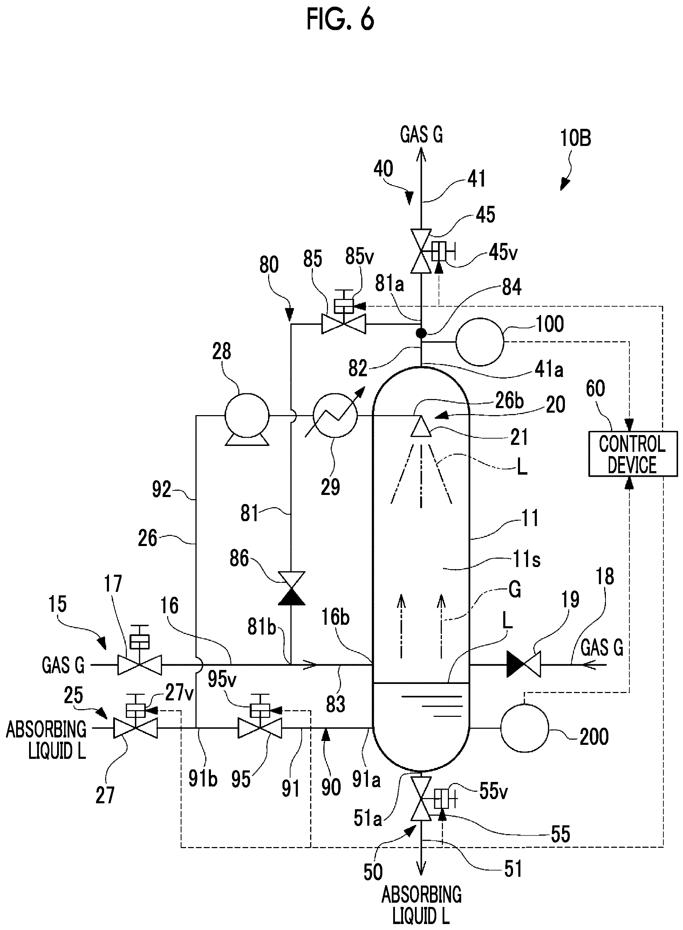

Fig. 6 is a diagram showing the configuration of the scrubber according to the second embodiment of the present disclosure.

As shown in Fig. 6, a scrubber 10B of the present embodiment includes at least the casing 11, the gas supply part 15, the liquid spray part 20, the gas release part 40, the gas circulation line 80, the absorbing liquid discharge part 50, the absorbing liquid circulation line 90, and the control device 60.

### (Hardware Configuration Diagram)

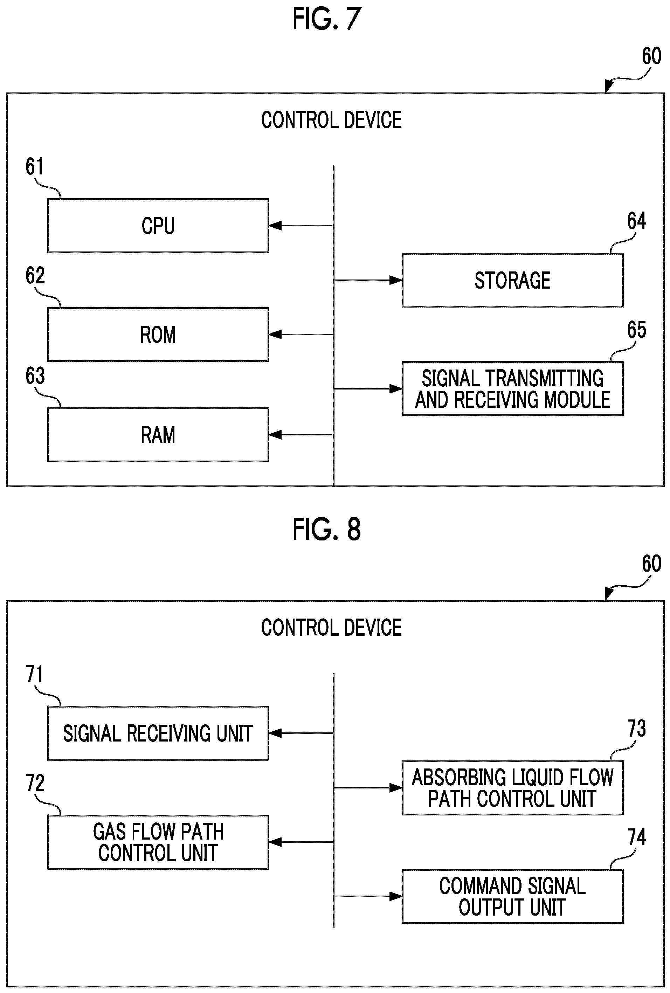

Fig. 7 is a diagram showing a hardware configuration of the control device of the scrubber according to the second embodiment of the present disclosure.

As shown in Fig. 7, the control device 60 is a computer including a central processing unit (CPU) 61, a read only memory (ROM) 62, a random access memory (RAM) 63, a storage 64 such as a hard disk drive (HDD), and a signal transmitting and receiving module 65.

### (Functional Block Diagram)

Fig. 8 is a functional block diagram of the scrubber according to the second embodiment of the present disclosure.

As shown in Fig. 8, the CPU 61 of the control device 60 realizes the respective functional configurations of a signal receiving unit 71, a gas flow path control unit 72, an absorbing liquid flow path control unit 73, and a command signal output unit 74 by executing a program stored in the RAM 63, the storage 64, or the like in advance.

The signal receiving unit 71 receives the detection signals from the ammonia gas concentration meter 100 and the ammonia absorbing liquid concentration meter 200 via the signal transmitting and receiving module 65 which is hardware.

The gas flow path control unit 72 outputs a command signal for controlling the opening and closing of the first valve 45 and the second valve 85, based on the ammonia concentration of the gas G detected by the ammonia gas concentration meter 100. The output command signal is output from the command signal output unit 74 to the valve drive unit 45v of the first valve 45 and the valve drive unit 85v of the second valve 85.

In a case where the ammonia concentration of the gas G detected by the ammonia gas concentration meter 100 is equal to or higher than the gas concentration reference value set in advance, the gas flow path control unit 72 outputs a command signal to close the first valve 45 and open the second valve 85. Then, the gas G from which ammonia has been removed in the internal space 11s of the casing 11 is circulated to the lower portion of the casing 11 through the gas circulation line 80 and comes into contact with the absorbing liquid L that is sprayed from the liquid spray part 20 again. In this way, the ammonia concentration of the gas G is reduced.

In a case where the ammonia concentration of the gas G detected by the ammonia gas concentration meter 100 falls below the gas concentration reference value set in advance, the gas flow path control unit 72 outputs a command signal to open the first valve 45 and close the second valve 85. In this way, the gas G from which ammonia has been removed in the internal space 11s of the casing 11 is released from the casing 11 to the gas release part 40.

The absorbing liquid flow path control unit 73 outputs a command signal for controlling the opening and closing of the third valve 55 and the fourth valve 95, based on the ammonia concentration of the absorbing liquid L detected by the ammonia absorbing liquid concentration meter 200. The output command signal is output from the command signal output unit 74 to the valve drive unit 55v of the third valve 55, the valve drive unit 95v of the fourth valve 95, and the valve drive unit 27v of the fifth valve 27.

In a case where the ammonia concentration of the absorbing liquid L detected by the ammonia absorbing liquid concentration meter 200 falls below the absorbing liquid concentration reference value set in advance, the absorbing liquid flow path control unit 73 outputs a command signal to close the third valve 55 and open the fourth valve 95. In this way, the absorbing liquid L is circulated to the upper portion of the casing 11 through the absorbing liquid circulation line 90, and is sprayed from the liquid spray part 20 again to come into contact with the gas G containing ammonia.

In a case where the ammonia concentration of the absorbing liquid L detected by the ammonia absorbing liquid concentration meter 200 is equal to or higher than the absorbing liquid concentration reference value set in advance, the absorbing liquid flow path control unit 73 outputs a command signal to open the third valve 55 and close the fourth valve 95. In a case where the ammonia concentration of the absorbing liquid L is equal to or higher than the absorbing liquid concentration reference value set in advance, the ammonia absorption efficiency by the absorbing liquid L is decreased. Therefore, the absorbing liquid L is discharged from the casing 11 to the absorbing liquid discharge part 50.

In addition, in a case where the ammonia concentration of the absorbing liquid L detected by the ammonia absorbing liquid concentration meter 200 is equal to or higher than the absorbing liquid concentration reference value set in advance, the absorbing liquid flow path control unit 73 outputs a command signal to open the fifth valve 27. Then, the absorbing liquid L is supplied to the liquid spray part 20 from the outside of the casing 11 by the absorbing liquid supply part 25. In this way, the ammonia concentration of the absorbing liquid L is reduced.

### (Procedure of Gas Treatment Method in Scrubber)

Fig. 2 is a flowchart showing a procedure of the gas treatment method in the scrubber according to the embodiment of the present disclosure.

In the scrubber 10B, the control device 60 executes the same procedure as that of the gas treatment method in the scrubber described in the first embodiment. As shown in Fig. 2, a gas treatment method S20 in the scrubber 10B includes step S21 of circulating the gas G, step S22 of detecting the ammonia concentration of the gas G, step S23 of determining whether or not the ammonia concentration falls below the gas concentration reference value, and step S24 of releasing the gas G from the upper portion of the casing 11.

After the treatment of removing the ammonia contained in the gas G is started, in step S21 of circulating the gas G, the control device 60 opens the opening-closing valve 17, closes the first valve 45, and opens the second valve 85. By opening the opening-closing valve 17, the gas G containing ammonia is introduced into the internal space 11s of the casing 11 through the gas supply line 16. The ammonia in the introduced gas G is absorbed by the absorbing liquid L that is sprayed from the liquid spray nozzle 21 of the liquid spray part 20 in the internal space 11s of the casing 11. The gas G from which ammonia has been removed in the internal space 11s of the casing 11 is circulated to the lower portion of the casing 11 through the gas circulation line 80 and comes into contact with the absorbing liquid L that is sprayed from the liquid spray part 20 again. In this way, the ammonia concentration of the gas G is reduced.

In step S22 of detecting the ammonia concentration of the gas G, the ammonia concentration of the gas G that is released from the upper portion of the casing 11 is detected by the ammonia gas concentration meter 100.

In step S23 of determining whether or not the ammonia concentration falls below the gas concentration reference value, the control device 60 determines whether or not the ammonia concentration of the gas G detected by the ammonia gas concentration meter 100 falls below the gas concentration reference value.

In a case where in step S23, it is determined that the ammonia concentration of the gas G does not fall below the gas concentration reference value (No in step S23), the process returns to step S22. On the other hand, in a case where in step S23, it is determined that the ammonia concentration of the gas G falls below the gas concentration reference value (Yes in step S23), the process proceeds to step S24.

In step S24 of releasing the gas G from the upper portion of the casing 11, the control device 60 opens the first valve 45 and closes the second valve 85. In this way, the circulation of the gas G from the upper portion of the casing 11 to the lower portion of the casing 11 is stopped by closing the second valve 85. By opening the first valve 45, the gas G from which the ammonia component has been removed in the internal space 11s of the casing 11 is released from the casing 11 to the gas release part 40. In this way, only the gas G from which the ammonia component has been sufficiently removed is released to the gas release part 40.

In addition, when performing the treatment of removing the ammonia contained in the gas G, as described above, the control device 60 closes the third valve 55 and the fifth valve 27 and opens the fourth valve 95. In this way, the absorbing liquid L is circulated from the lower portion of the casing 11 to the upper portion of the casing 11 via the liquid spray part 20 by the absorbing liquid circulation line 90.

The control device 60 monitors the ammonia concentration of the absorbing liquid L detected by the ammonia absorbing liquid concentration meter 200, and determines whether or not the detected ammonia concentration of the absorbing liquid L is equal to or higher than the absorbing liquid concentration reference value set in advance.

In a case where the ammonia concentration of the absorbing liquid L detected by the ammonia absorbing liquid concentration meter 200 is equal to or higher than the absorbing liquid concentration reference value, the control device 60 closes the fourth valve 95 and opens the third valve 55 and the fifth valve 27. By opening the third valve 55, the absorbing liquid L that has absorbed ammonia by the contact with the gas G containing ammonia is discharged to the absorbing liquid discharge part 50. In addition, by opening the fifth valve 27, a new absorbing liquid L is supplied from the outside of the casing 11 to the liquid spray part 20 by the absorbing liquid supply part 25. In this way, the ammonia concentration of the absorbing liquid L in the internal space 11s of the casing 11 can be reduced.

### (Operation and Effect)

According to the second embodiment, similarly to the first embodiment, it is possible to suppress the release of ammonia to the outside while suppressing an increase in the flow rate of the absorbing liquid L and an increase in the capacity of the casing 11.

In addition, in the second embodiment, the gas flow path control unit 72 controls the opening and closing of the first valve 45 and the second valve 85, based on the ammonia concentration of the gas G detected by the ammonia gas concentration meter 100. In this way, it is possible to automatically determine and execute whether to release the gas G to the gas release part 40 or to circulate the gas G to the gas circulation line 80, according to the ammonia concentration of the gas G, after the ammonia removal treatment with the absorbing liquid L.

In addition, in the second embodiment, in a case where the ammonia concentration of the gas G falls below the gas concentration reference value set in advance, the gas G can be released from the casing 11 to the gas release part 40 under the control of the gas flow path control unit 72. In addition, in a case where the detected ammonia concentration of the gas G is equal to or higher than the gas concentration reference value set in advance, the gas G is circulated to the lower portion of the casing 11 through the gas circulation line 80 and can be brought into contact with the absorbing liquid L that is sprayed from the liquid spray part 20 again.

In addition, in the second embodiment, the absorbing liquid flow path control unit 73 controls the opening and closing of the third valve 55 and the fourth valve 95, based on the ammonia concentration of the absorbing liquid L detected by the ammonia absorbing liquid concentration meter 200. In this way, it is possible to automatically determine and execute whether to discharge the absorbing liquid L that has absorbed ammonia by the contact with the gas G containing ammonia to the absorbing liquid discharge part 50 or to circulate the absorbing liquid L to the upper portion of the casing 11 through the absorbing liquid circulation line 90.

In addition, in the second embodiment, in a case where the ammonia concentration of the absorbing liquid L falls below the absorbing liquid concentration reference value set in advance, under the control of the absorbing liquid flow path control unit 73, the absorbing liquid L is circulated to the upper portion of the casing 11 through the absorbing liquid circulation line 90 and can be sprayed from the liquid spray part 20 again to be brought into contact with the gas G containing ammonia. In addition, in a case where the detected ammonia concentration of the absorbing liquid L is equal to or higher than the absorbing liquid concentration reference value set in advance, the ammonia absorption efficiency by the absorbing liquid L is decreased, and therefore, the absorbing liquid L can be discharged from the casing 11 to the absorbing liquid discharge part 50.

In addition, in the second embodiment, in a case where the ammonia concentration of the absorbing liquid L detected by the ammonia absorbing liquid concentration meter 200 is equal to or higher than the absorbing liquid concentration reference value set in advance, the absorbing liquid flow path control unit 73 opens the fifth valve 27. Then, the absorbing liquid L is supplied to the liquid spray part 20 from the outside of the casing 11 by the absorbing liquid supply part 25. In this way, the ammonia concentration of the absorbing liquid L can be reduced.

### (Other Embodiments)

Although the embodiments of the present disclosure have been described in detail above with reference to the drawings, the specific configurations are not limited to the respective embodiments, and design changes or the like can be made within a scope which does not depart from the gist of the present disclosure.

In the above-described embodiments, the procedures of the gas treatment methods S10 and S20 in the scrubber 10 are shown. However, the order thereof and the content of each specific step can be appropriately changed.

Further, in the above-described embodiments, the configuration in which the seawater around the floating structure is directly sucked and used as the absorbing liquid has been described as an example. However, the present invention is not limited to this configuration. For example, seawater stored in a seawater tank (not shown) such as a ballast tank provided in a ship may be used, or seawater around the floating structure and seawater in the seawater tank (not shown) provided in the ship may be used by being appropriately switched.

In addition, in the above-described embodiments, a case where a new absorbing liquid L having a low ammonia concentration is supplied to the liquid spray part 20 from the outside when the ammonia concentration of the absorbing liquid L detected by the ammonia absorbing liquid concentration meter 200 is equal to or higher than the absorbing liquid concentration reference value set in advance has been described. However, the present invention is not limited to the configurations of the above-described embodiments. In addition to the configurations of the above-described embodiments, for example, even in a case where the ammonia concentration of the gas G detected by the ammonia gas concentration meter 100 exceeds the ammonia concentration upper limit default value set in advance, a new absorbing liquid L having a low ammonia concentration may be supplied to the liquid spray part 20 from the outside. In this way, even in a situation where the ammonia concentration of the circulating absorbing liquid L rapidly increases, the ammonia concentration of the circulating absorbing liquid L can be decreased before the ammonia concentration exceeds the absorbing liquid concentration reference value.

### <Additional Remark>

The scrubbers 10 and 10B and the gas treatment methods S10 and S20 in the scrubbers 10 and 10B described in the respective embodiments are understood as follows, for example.
(1) A scrubber 10 or 10B according to a first aspect includes: a casing 11; a gas supply part 15 capable of supplying a gas G containing ammonia into the casing 11; a liquid spray part 20 capable of spraying an absorbing liquid L that is supplied from an outside of the casing 11 from an upper portion in the casing 11; a gas release part 40 capable of releasing the gas G from an upper portion of the casing 11; an absorbing liquid discharge part 50 capable of discharging the absorbing liquid L from a lower portion of the casing 11; and a gas circulation line 80 that circulates the gas G from the upper portion of the casing 11 to the lower portion of the casing 11.

As the absorbing liquid L, fresh water or seawater can be given as an example.

In the scrubber 10 or 10B, the gas G containing ammonia is supplied into the casing 11 by the gas supply part 15. The liquid spray part 20 sprays the absorbing liquid L supplied from the outside of the casing 11 from the upper portion in the casing 11. In this way, the absorbing liquid L comes into contact with the gas G containing ammonia, so that the ammonia contained in the gas G is absorbed by the absorbing liquid L. The absorbing liquid L that has absorbed ammonia falls to the lower portion of the casing 11 due to its own weight. The gas G from which ammonia has been removed is released from the upper portion of the casing 11 by the gas release part 40. The absorbing liquid discharge part 50 discharges the absorbing liquid L to which the ammonia is absorbed, to the outside of the casing 11 from the lower portion of the casing 11. The gas circulation line 80 circulates the gas G from the upper portion of the casing 11 to the lower portion of the casing 11. That is, the gas circulation line 80 circulates the gas G after the ammonia is absorbed by the absorbing liquid L sprayed from the liquid spray part 20, from the upper portion of the casing 11 to the lower portion of the casing 11. The gas G circulated to the lower portion of the casing 11 comes into contact with the absorbing liquid L sprayed from the liquid spray part 20 again in the casing 11. In this way, even in a case where ammonia remains in the gas G in which ammonia is absorbed by the absorbing liquid L, the gas G is circulated to the lower portion of the casing 11, so that the absorption of the ammonia by the absorbing liquid L is performed multiple times. Therefore, even in a case where ammonia cannot be sufficiently removed by only once contact with the absorbing liquid L, the removal of ammonia from the gas G containing ammonia can be sufficiently performed. In addition, it is not necessary to increase the amount of the absorbing liquid L or increase the capacity of the casing 11 for that purpose. Therefore, it is possible to suppress the release of ammonia to the outside while suppressing an increase in the flow rate of the absorbing liquid L and an increase in the capacity of the casing 11.

(2) A scrubber 10 or 10B according to a second aspect is the scrubber 10 or 10B according to the above (1), further including: a first valve 45 that opens and closes a flow path of the gas G from the casing 11 to the gas release part 40; a second valve 85 that opens and closes a flow path of the gas G from the casing 11 to the gas circulation line 80; and an ammonia gas concentration meter 100 that detects ammonia concentration of the gas G flowing from the casing 11 to the gas release part 40.

In this way, the release of the gas G from the casing 11 to the gas release part 40 can be intermittently performed by opening and closing the first valve 45. In addition, the circulation of the gas G from the casing 11 to the gas circulation line 80 can be intermittently performed by opening and closing the second valve 85. The ammonia gas concentration meter 100 detects the ammonia concentration of the gas G flowing from the casing 11 to the gas release part 40. In this way, the first valve 45 and the second valve 85 can be opened and closed based on the ammonia concentration of the gas G detected by the ammonia gas concentration meter 100. For example, in a case where the detected ammonia concentration of the gas G falls below the gas concentration reference value set in advance, the first valve 45 is opened and the second valve 85 is closed. In this way, the gas G from which ammonia has been removed in the casing 11 is released from the casing 11 to the gas release part 40. In addition, in a case where the detected ammonia concentration of the gas G is equal to or higher than the gas concentration reference value set in advance, the first valve 45 is closed and the second valve 85 is opened. Then, the gas G from which ammonia has been removed in the casing 11 is circulated to the lower portion of the casing 11 through the gas circulation line 80 and comes into contact with the absorbing liquid L that is sprayed from the liquid spray part 20 again. In this way, the ammonia concentration of the gas G is reduced.

(3) A scrubber 10B according to a third aspect is the scrubber 10B according to the above (2), further including: a gas flow path control unit 72 that controls opening and closing of the first valve 45 and the second valve 85, based on the ammonia concentration of the gas G detected by the ammonia gas concentration meter 100.

In this way, the gas flow path control unit 72 can automatically determine and execute whether to release the gas G to the gas release part 40 or to circulate the gas G to the gas circulation line 80, according to the ammonia concentration of the gas G after the ammonia removal treatment by the absorbing liquid L, by controlling the opening and closing of the first valve 45 and the second valve 85, based on the ammonia concentration of the gas G detected by the ammonia gas concentration meter 100.

(4) A scrubber 10B according to a fourth aspect is the scrubber 10B according to the above (3), in which the gas flow path control unit 72 opens the first valve 45 and closes the second valve 85, in a case where the ammonia concentration of the gas G detected by the ammonia gas concentration meter 100 falls below a gas concentration reference value set in advance, and closes the first valve 45 and opens the second valve 85, in a case where the ammonia concentration of the gas G detected by the ammonia gas concentration meter 100 is equal to or higher than the gas concentration reference value set in advance.

In this way, in a case where the ammonia concentration of the gas G falls below the gas concentration reference value set in advance, the gas G can be released from the casing 11 to the gas release part 40. In addition, in a case where the detected ammonia concentration of the gas G is equal to or higher than the gas concentration reference value set in advance, the gas G is circulated to the lower portion of the casing 11 through the gas circulation line 80 and can be brought into contact with the absorbing liquid L that is sprayed from the liquid spray part 20 again.

(5) A scrubber 10 or 10B according to a fifth aspect is the scrubber 10 or 10B according to any one of the above (1) to (4), further including: an absorbing liquid circulation line 90 capable of circulating an absorbing liquid L from a lower portion of the casing 11 to an upper portion of the casing 11 via the liquid spray part 20; a third valve 55 that opens and closes a flow path of the absorbing liquid L that is discharged from the casing 11 to the absorbing liquid discharge part 50; a fourth valve 95 that opens and closes a flow path of the absorbing liquid L from the casing 11 to the absorbing liquid circulation line 90; and an ammonia absorbing liquid concentration meter 200 that detects ammonia concentration of the absorbing liquid L in the casing 11.

In this way, the absorbing liquid circulation line 90 can circulate the absorbing liquid L from the lower portion of the casing 11 to the upper portion of the casing 11 via the liquid spray part 20. The third valve 55 can intermittently discharge the absorbing liquid L from the casing 11 to the absorbing liquid discharge part 50. The fourth valve 95 can intermittently circulate the absorbing liquid L from the casing 11 through the absorbing liquid circulation line 90. The ammonia absorbing liquid concentration meter 200 detects the ammonia concentration of the absorbing liquid L in the casing 11. In this way, by opening and closing the third valve 55 and the fourth valve 95 based on the ammonia concentration of the absorbing liquid L in the casing 11, it is possible to switch between the discharge of the absorbing liquid L to the absorbing liquid discharge part 50 and the circulation of the absorbing liquid L to the upper portion of the casing 11 through the absorbing liquid circulation line 90.

(6) A scrubber 10B according to a sixth aspect is the scrubber 10B according to the above (5), further including: an absorbing liquid flow path control unit 73 that controls opening and closing of the third valve 55 and the fourth valve 95, based on the ammonia concentration of the absorbing liquid L detected by the ammonia absorbing liquid concentration meter 200.

In such a configuration, the absorbing liquid flow path control unit 73 controls the opening and closing of the third valve 55 and the fourth valve 95, based on the ammonia concentration of the absorbing liquid L detected by the ammonia absorbing liquid concentration meter 200. In this way, it is possible to automatically switch between the discharge of the absorbing liquid L, which has absorbed ammonia by the contact with the gas G containing ammonia, to the absorbing liquid discharge part 50 and the circulation of the absorbing liquid L to the upper portion of the casing 11 through the absorbing liquid circulation line 90.

(7) A scrubber 10B according to a seventh aspect is the scrubber 10B according to the above (6), in which the absorbing liquid flow path control unit 73 closes the third valve 55 and opens the fourth valve 95, in a case where the ammonia concentration of the absorbing liquid L detected by the ammonia absorbing liquid concentration meter 200 falls below an absorbing liquid concentration reference value set in advance, and opens the third valve 55 and closes the fourth valve 95, in a case where the ammonia concentration of the absorbing liquid L detected by the ammonia absorbing liquid concentration meter 200 is equal to or higher than the absorbing liquid concentration reference value set in advance.

In this way, in a case where the ammonia concentration of the absorbing liquid L falls below the absorbing liquid concentration reference value set in advance, the absorbing liquid L can be circulated to the upper portion of the casing 11 through the absorbing liquid circulation line 90 and be sprayed from the liquid spray part 20 again to be brought into contact with the gas G containing ammonia. In addition, in a case where the detected ammonia concentration of the absorbing liquid L is equal to or higher than the absorbing liquid concentration reference value set in advance, the ammonia absorption efficiency by the absorbing liquid L is decreased, and therefore, the absorbing liquid L can be discharged from the casing 11 to the absorbing liquid discharge part 50.

(8) A scrubber 10B according to an eighth aspect is the scrubber 10B according to the above (7), further including: an absorbing liquid supply part 25 that supplies the absorbing liquid L from the outside of the casing 11 to the liquid spray part 20; and a fifth valve 27 that opens and closes a flow path of the absorbing liquid L from the absorbing liquid supply part 25 to the liquid spray part 20, in which the absorbing liquid flow path control unit 73 opens the fifth valve 27 in a case where the ammonia concentration of the absorbing liquid L detected by the ammonia absorbing liquid concentration meter 200 is equal to or higher than the absorbing liquid concentration reference value set in advance.

In this way, in a case where the ammonia concentration of the absorbing liquid L detected by the ammonia absorbing liquid concentration meter 200 is equal to or higher than the absorbing liquid concentration reference value set in advance, the absorbing liquid flow path control unit 73 opens the fifth valve 27. Then, the absorbing liquid L is supplied to the liquid spray part 20 from the outside of the casing 11 by the absorbing liquid supply part 25. In this way, the ammonia concentration of the absorbing liquid L can be reduced.

(9) A scrubber 10 or 10B according to a ninth aspect is the scrubber 10 or 10B according to any one of the above (1) to (8), further including: an absorbing liquid cooling part 29 capable of cooling the absorbing liquid L that is sprayed from the upper portion in the casing 11 by the liquid spray part 20.

In this way, the absorbing liquid cooling part 29 can cool the absorbing liquid L to be sprayed from the upper portion in the casing 11 by the liquid spray part 20. In particular, the temperature of the absorbing liquid L circulated by the absorbing liquid circulation line 90 rises due to the reaction heat during absorbing ammonia. By cooling the absorbing liquid L whose temperature has risen, the ammonia absorption efficiency of the absorbing liquid L can be increased.

(10) A scrubber 10 or 10B according to a tenth aspect is the scrubber 10 or 10B according to any one of the above (1) to (9), further including: a fan 84 that sends out the gas G from the upper portion of the casing 11.

In this way, the gas G can be sent out from the upper portion of the casing 11 by the fan 84. In particular, in a case where the gas G is circulated from the upper portion of the casing 11 to the lower portion of the casing 11 by the gas circulation line 80, the gas G can be efficiently circulated.

(11) A gas treatment method S10 or S20 in a scrubber 10 or 10B according to an eleventh aspect is a gas treatment method S10 or S20 in the scrubber 10 or 10B according to any one of the above (1) to (10), the method including: a step S11 or S21 of spraying water that is supplied from an outside of the casing 11 from an upper portion in the casing 11 while supplying a gas G containing ammonia into the casing 11, and circulating the gas G from an upper portion of the casing 11 to a lower portion of the casing 11; a step S12 or S22 of detecting ammonia concentration of the gas G that is released from the upper portion of the casing 11; and a step S14 or S24 of stopping circulation of the gas G from the upper portion of the casing 11 to the lower portion of the casing 11 and releasing the gas G from the upper portion of the casing 11, in a case where the detected ammonia concentration falls below a gas concentration reference value set in advance.

In the gas treatment method S10 or S20 in the scrubber 10 or 10B, in a case where the ammonia concentration of the gas G detected by the ammonia gas concentration meter 100 is equal to or higher than the gas concentration reference value set in advance, the gas G from which ammonia has been removed in the casing 11 is circulated to the lower portion of the casing 11. The gas G is circulated to the lower portion of the casing 11, so that the absorption of the ammonia by the absorbing liquid L is performed multiple times. Therefore, even in a case where ammonia cannot be sufficiently removed by only once contact with the absorbing liquid L, the removal of ammonia from the gas G containing ammonia can be sufficiently performed. In addition, it is not necessary to increase the amount of the absorbing liquid L or increase the capacity of the casing 11 for that purpose. Therefore, it is possible to suppress the release of ammonia to the outside while suppressing an increase in the flow rate of the absorbing liquid L and an increase in the capacity of the casing 11.

### Industrial Applicability

According to the scrubber and the gas treatment method in the scrubber of the present disclosure, it is possible to suppress the release of ammonia to the outside while suppressing an increase in the flow rate of the absorbing liquid and an increase in the capacity of the casing.

### Reference Signs List

10, 10B: scrubber
11: casing
11s: internal space
15: gas supply part
16: gas supply line
16a: one end
16b: other end
17: opening-closing valve
18: sub gas supply line
19: check valve
20: liquid spray part
21: liquid spray nozzle
25: absorbing liquid supply part
26: absorbing liquid supply line
26b: other end
27: fifth valve
27v: valve drive unit
28: pump
29: absorbing liquid cooling part
40: gas release part
41: gas release line
41a: one end
45: first valve
45v: valve drive unit
50: absorbing liquid discharge part
51: absorbing liquid discharge line
51a: one end
55: third valve
55v: valve drive unit
60: control device
61: CPU
62: ROM
63: RAM
64: storage
65: signal transmitting and receiving module
71: signal receiving unit
72: gas flow path control unit
73: absorbing liquid flow path control unit
74: command signal output unit
80: gas circulation line
81: gas circulation connection pipe
81a: one end
81b: other end
82: partial section
83: partial section
84: fan
85: second valve
85v: valve drive unit
86: check valve
90: absorbing liquid circulation line
91: absorbing liquid circulation connection pipe
91a: one end
91b: other end
92: partial section
95: fourth valve
95v: valve drive unit
100: ammonia gas concentration meter
200: ammonia absorbing liquid concentration meter
Dv: up-down direction
G: gas
L: absorbing liquid
S10, S20: gas treatment method in scrubber
S11, S21: step of circulating gas
S12, S22: step of detecting ammonia concentration of gas
S13, S23: step of determining whether or not ammonia concentration falls below gas concentration reference value
S14, S24: step of releasing gas from upper portion of casing

## Claims

1. A scrubber comprising:
a casing;
a gas supply part capable of supplying a gas containing ammonia into the casing;
a liquid spray part capable of spraying an absorbing liquid that is supplied from an outside of the casing from an upper portion in the casing;
a gas release part capable of releasing the gas from an upper portion of the casing;
an absorbing liquid discharge part capable of discharging the absorbing liquid from a lower portion of the casing; and
a gas circulation line that circulates the gas from the upper portion of the casing to the lower portion of the casing.

2. The scrubber according to Claim 1, further comprising:
a first valve that opens and closes a flow path of the gas from the casing to the gas release part;
a second valve that opens and closes a flow path of the gas from the casing to the gas circulation line; and
an ammonia gas concentration meter that detects ammonia concentration of the gas flowing from the casing to the gas release part.

3. The scrubber according to Claim 2, further comprising:
a gas flow path control unit that controls opening and closing of the first valve and the second valve, based on the ammonia concentration of the gas detected by the ammonia gas concentration meter.

4. The scrubber according to Claim 3,
wherein the gas flow path control unit
opens the first valve and closes the second valve, in a case where the ammonia concentration of the gas detected by the ammonia gas concentration meter falls below a gas concentration reference value set in advance, and
closes the first valve and opens the second valve, in a case where the ammonia concentration of the gas detected by the ammonia gas concentration meter is equal to or higher than the gas concentration reference value set in advance.

5. The scrubber according to Claim 1 or 2, further comprising:
an absorbing liquid circulation line capable of circulating the absorbing liquid from the lower portion of the casing to the upper portion of the casing via the liquid spray part;
a third valve that opens and closes a flow path of the absorbing liquid that is discharged from the casing to the absorbing liquid discharge part;
a fourth valve that opens and closes a flow path of the absorbing liquid from the casing to the absorbing liquid circulation line; and
an ammonia absorbing liquid concentration meter that detects ammonia concentration of the absorbing liquid in the casing.

6. The scrubber according to Claim 5, further comprising:
an absorbing liquid flow path control unit that controls opening and closing of the third valve and the fourth valve, based on the ammonia concentration of the absorbing liquid detected by the ammonia absorbing liquid concentration meter.

7. The scrubber according to Claim 6,
wherein the absorbing liquid flow path control unit
closes the third valve and opens the fourth valve, in a case where the ammonia concentration of the absorbing liquid detected by the ammonia absorbing liquid concentration meter falls below an absorbing liquid concentration reference value set in advance, and
opens the third valve and closes the fourth valve, in a case where the ammonia concentration of the absorbing liquid detected by the ammonia absorbing liquid concentration meter is equal to or higher than the absorbing liquid concentration reference value set in advance.

8. The scrubber according to Claim 7, further comprising:
an absorbing liquid supply part that supplies the absorbing liquid from the outside of the casing to the liquid spray part; and
a fifth valve that opens and closes a flow path of the absorbing liquid from the absorbing liquid supply part to the liquid spray part,
wherein the absorbing liquid flow path control unit opens the fifth valve in a case where the ammonia concentration of the absorbing liquid detected by the ammonia absorbing liquid concentration meter is equal to or higher than the absorbing liquid concentration reference value set in advance.

9. The scrubber according to Claim 1 or 2, further comprising:
an absorbing liquid cooling part capable of cooling the absorbing liquid that is sprayed from then upper portion in the casing by the liquid spray part.

10. The scrubber according to Claim 1 or 2, further comprising:
a fan that sends out the gas from the upper portion of the casing.

11. A gas treatment method in the scrubber according to Claim 1 or 2, comprising:
a step of spraying water that is supplied from an outside of the casing from an upper portion in the casing while supplying a gas containing ammonia into the casing, and circulating the gas from an upper portion of the casing to a lower portion of the casing;
a step of detecting ammonia concentration of the gas that is released from the upper portion of the casing; and
a step of stopping circulation of the gas from the upper portion of the casing to the lower portion of the casing and releasing the gas from the upper portion of the casing, in a case where the detected ammonia concentration falls below a gas concentration reference value set in advance.
